# EUROPÄISCHE PATENTSCHRIFT

(11) **EP 2 199 637 B1**
(45) Veröffentlichungstag und Bekanntmachung des Hinweises auf die Patenterteilung: **16.03.2011**
(21) Anmeldenummer: 09176039.7
(22) Anmeldetag: 16.11.2009
(51) Int. Cl.: F16D 48/06, F16H 61/00, F16H 61/12

(54) **Verfahren zur Überwachung einer hydraulischen oder pneumatischen Getriebesteuerung**
Method for monitoring a hydraulic or pneumatic drive control
Procédé de surveillance d'une commande d'engrenage hydraulique ou pneumatique

(30) Priorität: 15.12.2008 DE 102008054662
(43) Veröffentlichungstag der Anmeldung: 23.06.2010
(73) Patentinhaber: ZF Friedrichshafen AG, 88038 Friedrichshafen (DE)
(72) Erfinder: Bitzer, Franz, 88048, Friedrichshafen (DE); Kramer, Rupert, 88048, Friedrichshafen (DE); Gansohr, Marcus, 88682, Salem (DE); Herter, Peter, 88212, Ravensburg (DE); Petzold, Rainer, 88045, Friedrichshafen (DE); Kemler, Johannes, 88697, Bermatingen (DE)

(56) Entgegenhaltungen:
- EP-A2- 0 933 564
- DE-A1- 19 834 765
- DE-A1- 19 849 488
- DE-A1- 19 921 301
- DE-A1-102006 014 141

## Beschreibung

Die Erfindung betrifft ein Verfahren zur Überwachung einer hydraulischen oder pneumatischen Getriebesteuerung, die einen Druckversorgungsteil mit einer Versorgungsleitung aufweist, welche ein unter einem Versorgungsdruck stehendes Druckmittel führt, sowie mit einem Betätigungsteil eines Kupplungsstellers einer Reibungskupplung, wobei das Betätigungsteil einen Druckraum aufweist, der über ein zugeordnetes Kupplungs-Steuerungsventil mit der Versorgungsleitung verbindbar ist, und bei welcher der Versorgungsdruck mittels eines über ein Steuerungsventil mit der Versorgungsleitung verbindbaren Drucksensors ermittelt wird.

Eine hydraulische oder pneumatische Getriebesteuerung eines automatisierten Schaltgetriebes weist üblicherweise einen Druckversorgungsteil und einen Betätigungsteil auf. In dem Druckversorgungsteil wird in einer Versorgungsleitung ein Versorgungsdruck erzeugt und auf einem vorgegebenen Druckniveau gehalten. Der Betätigungsteil umfasst zumeist als einfachwirkende oder doppeltwirkende Stellzylinder ausgebildete Stellantriebe, wie einen Kupplungssteller und mehrere Getriebesteller, deren Druckräume über zugeordnete Steuerungsventile bedarfsweise durch eine Verbindung mit der Versorgungsleitung druckbefüllt oder durch eine Verbindung mit einer zu einer Druckmittelsenke führenden Drucklosleitung entleert bzw. drucklos geschaltet werden können. Bei einem hydraulischen Steuerungssystem kann beispielsweise der Ölsumpf als Druckmittelsenke dienen, während bei einem pneumatischen Steuerungssystem die Abluft über die Drucklosleitung an die Umgebungsluft abgegeben werden kann.

Eine typische hydraulische Getriebesteuerung eines automatisierten Schaltgetriebes ist beispielsweise in der DE 198 49 488 C2 beschrieben. Der Druckversorgungsteil dieser bekannten Getriebesteuerung weist eine durch einen Elektromotor antreibbare Ölpumpe auf, mittels der Hydrauliköl durch ein Filterelement aus einem Ölsumpf und durch ein Rückschlagventil in eine Versorgungsleitung förderbar ist. Zur Begrenzung des in der Versorgungsleitung herrschenden Versorgungsdruckes ist ein Druckbegrenzungsventil an die Versorgungsleitung angeschlossen, durch das überschüssiges Hydrauliköl zurück in den Ölsumpf fließen kann. Zur Aufrechterhaltung des Versorgungsdruckes bei abgeschalteter Ölpumpe ist ein an die Versorgungsleitung angeschlossener Druckspeicher vorgesehen. Zur Erfassung des Versorgungsdruckes ist ein Drucksensor an die Versorgungsleitung angeschlossen.

Der Betätigungsteil dieser bekannten Getriebesteuerung weist einerseits einen als ein einfachwirkender Stellzylinder ausgebildeten und über ein zugeordnetes Kupplungs-Steuerungsventil steuerbaren Kupplungssteller zum Aus- und Einrücken einer als Membranfederkupplung ausgebildeten Reibungskupplung auf. Andererseits umfasst der Betätigungsteil einen als ein einfachwirkender Stellzylinder ausgebildeten und über ein zugeordnetes Wähl-Steuerungsventil steuerbaren Wählsteller und einen als ein doppeltwirkender Stellzylinder ausgebildeten und über zwei zugeordnete Schalt-Steuerungsventile steuerbaren Schaltsteller.

Als Besonderheit ist ein durch den Stelldruck des Kupplungsstellers steuerbares Abschaltventil vorgesehen, durch das eine Betätigung des Wählstellers und des Schaltstellers nur bei ausgerückter Reibungskupplung ermöglicht wird. Zur Steuerung der Reibungskupplung ist ein die Stellposition der Kolbenstange des Kupplungsstellers abgreifender Wegsensor vorgesehen. Bei einem Defekt des Drucksensors kann der Versorgungsdruck nicht mehr ermittelt werden, und die Getriebesteuerung muss dann sofort in einen Notbetrieb übergehen, obwohl der in der Versorgungsleitung herrschende Versorgungsdruck noch hinreichend hoch sein kann, um zumindest für eine gewisse Zeitspanne einen Normalbetrieb zu gewährleisten.

Aus der EP 0 933 564 B1 ist dagegen eine Getriebesteuerung eines automatisierten Schaltgetriebes bekannt, bei der die Betätigungseinrichtung einen Wählsteller und ein Schaltsteller aufweist, die jeweils als doppeltwirkender Stellzylinder ausgebildet sind. In einer zweiten Ausführungsform dieser Getriebesteuerung nach der dortigen Fig. 9 ist einem Druckraum des Wählstellers und einem Druckraum des Schaltstellers jeweils ein zugeordnetes Wähl- bzw. Schalt-Steuerungsventil unmittelbar vorgeschaltet. Dem jeweils anderen Druckraum des Wählstellers und des Schaltstellers sowie dem Wähl-Steuerungsventil und dem Schalt-Steuerungsventil ist ein gemeinsames Haupt-Steuerungsventil vorgeschaltet, über das die betreffende Verteilerleitung wahlweise mit der Versorgungsleitung des Druckversorgungsteils oder mit einer zu dem Ölsumpf führenden Drucklosleitung verbindbar ist.

An die Verteilerleitung ist ein Drucksensor angeschlossen, dessen Drucksignal über die Ansteuerung der Steuerungsventile im Wesentlichen zur Steuerung des Wählstellers und des Schaltstellers verwendet wird. Mittels des Drucksensors kann jedoch auch der in der Versorgungsleitung herrschende Versorgungsdruck ermittelt werden, wenn das Haupt-Steuerungsventil vollständig zu der Versorgungsleitung hin geöffnet ist, und sich das Wähl-Steuerungsventil und das Schalt-Steuerungsventil jeweils in ihrer geschlossenen Nullposition befinden.

Um die damit verbundenen Funktionseinschränkungen zu vermeiden, wird in der DE 199 21 301 A1 eine spezielle Ausführung des Haupt-Steuerungsventils vorgeschlagen, mit welcher der nunmehr an eine Sekundärleitung angeschlossene Drucksensor sowohl in der zu der Versorgungsleitung vollständig geöffneten als auch in der zu der Versorgungsleitung vollständig geschlossenen Endstellung des Haupt-Steuerungsventils mit der Versorgungsleitung in Verbindung steht. Hierdurch ist eine Erfassung und Überwachung des Versorgungsdruckes mittels des Drucksensors auch bei drucklos geschalteter Verteilerleitung möglich, ohne dass sich das Wähl-Steuerungsventil und das Schalt-Steuerungsventil hierzu in einer bestimmten Schaltposition befinden müssen. In der geänderten Ausführungsform ist das Haupt-Steuerungsventil jedoch deutlich komplizierter und entsprechend teurer sowie störungsanfälliger.

Vor diesem Hintergrund liegt der Erfindung die Aufgabe zugrunde, ein Verfahren zur Überwachung einer hydraulischen oder pneumatischen Getriebesteuerung der eingangs genannten Art vorzuschlagen, mit dem der in der Versorgungsleitung herrschende Versorgungsdruck ohne besondere konstruktive Vorkehrungen an der Getriebesteuerung mittels eines über ein Steuerungsventil mit der Versorgungsleitung verbindbaren Drucksensors ermittelt werden kann.

Diese Aufgabe wird durch ein Verfahren mit den Merkmalen des Hauptanspruchs gelöst, während vorteilhafte Ausgestaltungen und Weiterbildungen der Gegenstand der Unteransprüche sind.

Das Verfahren gemäß der Erfindung geht von der Erkenntnis aus, dass ein kurzzeitiges Öffnen eines Drosselquerschnitts, der eine unter einem höheren Quelldruck p_{Q} stehende Druckquelle mit einem unter einem niedrigeren Stelldruck p_{S} stehenden Druckraum verbindet, in dem Druckraum zu einem Druckanstieg Δp_{S} sowie zu einem Druckgradienten Δp_{S} / Δt führt, die sich proportional zu der Druckdifferenz Δp = p_{Q} - p_{S} zwischen der Druckquelle und dem Druckraum verhalten. Dies bedeutet, dass der in der Druckquelle vorliegende Quelldruck p_{Q} aus dem Stelldruck p_{S} und dem Druckanstieg Δp_{S} oder dem Druckgradienten Δp_{S} / Δt in dem Druckraum berechnet werden kann. Dieses Prinzip zur Ermittlung eines höheren Quelldruckes p_{Q} ist im Übrigen bei allen hydraulischen oder pneumatischen Steuerungen anwendbar, bei denen ein Drucksensor durch ein Steuerungsventil getrennt stromab von der Druckquelle angeordnet ist.

Die Erfindung betrifft daher ein Verfahren zur Überwachung einer hydraulischen oder pneumatischen Getriebesteuerung, die einen Druckversorgungsteil mit einer Versorgungsleitung aufweist, welche ein unter einem Versorgungsdruck stehendes Druckmittel führt, sowie mit einem Betätigungsteil eines Kupplungsstellers einer Reibungskupplung, wobei das Betätigungsteil einen Druckraum aufweist, der über ein zugeordnetes Kupplungs-Steuerungsventil mit der Versorgungsleitung verbindbar ist, und bei welcher der Versorgungsdruck mittels eines über ein Steuerungsventil mit der Versorgungsleitung verbindbaren Drucksensors ermittelt wird.

Zur Lösung der gestellten Aufgabe ist vorgesehen, dass der in der Versorgungsleitung des Druckversorgungsteils einer hydraulischen oder pneumatischen Getriebesteuerung aktuell herrschende Versorgungsdruck p_{V} aus dem in dem Druckraum des Kupplungsstellers herrschenden Stelldruck p_{K} und aus dem durch ein kurzzeitiges Öffnen des Kupplungs-Steuerungsventils erzeugten Druckanstieg Δp_{K} und/oder Druckgradienten Δp_{K} / Δt des Stelldruckes p_{K} berechnet wird, wobei der Stelldruck p_{K}, der Druckanstieg Δp_{K} und/oder der Druckgradient Δp_{K} / Δt mittels eines an den Druckraum des Kupplungsstellers angeschlossenen Drucksensors erfasst werden.

Das erfindungsgemäße Verfahren erfordert keine besonderen konstruktiven Vorkehrungen an dem Druckversorgungsteil oder dem Betätigungsteil der Getriebesteuerung und kann als Notverfahren, also bei einem Defekt eines an die Versorgungsleitung angeschlossenen Drucksensors, sowie auch als Standardverfahren, d.h. bei einer Einsparung eines an die Versorgungsleitung angeschlossenen Drucksensors, genutzt werden.

Eine entsprechende hydraulische oder pneumatische Kupplungssteuerung, die auch Bestandteil einer Getriebesteuerung sein kann, ist beispielsweise in zwei Ausführungsformen aus der DE 10 2006 014 141 A1 bekannt. In dem dort beschriebenen Verfahren zur Steuerung einer automatisierten Reibungskupplung wird der an den Druckraum des Kupplungsstellers angeschlossene Drucksensor jedoch nur zur Steuerung der Reibungskupplung verwendet. In diesem bekannten Verfahren ist im wesentlichen vorgesehen, dass die Grobsteuerung der Reibungskupplung weggesteuert, d.h. mittels des Wegsignals eines die Stellposition der Kolbenstange des Kupplungsstellers abgreifenden Wegsensors, und die Feinsteuerung der Reibungskupplung druckgesteuert, d.h. mittels des Drucksignals des den in dem Druckraum des Kupplungsstellers herrschenden Stelldruck erfassenden Drucksensors, erfolgt.

Damit der aktuelle Betriebszustand der Reibungskupplung, also der Einrückungsgrad oder der Grad der Überanpressung der Reibungskupplung, durch die mit der erfindungsgemäßen Ermittlung des Versorgungsdruckes p_{V} verbundenen Erhöhung des Stelldruckes p_{K} des Kupplungsstellers nicht dauerhaft verändert oder gestört wird, ist zweckmäßig vorgesehen, dass zeitnah, also kurz vor oder nach dem Öffnen des Kupplungs-Steuerungsventils, zur Ermittlung des Versorgungsdruckes p_{V} durch eine kurzzeitige Verbindung des Druckraums des Kupplungsstellers mit einer Drucklosleitung ein Abfall Δp_{K} des Stelldruckes p_{K} erzeugt wird, der im Betrag in etwa dem Anstieg Δp_{K} des Stelldruckes p_{K} durch das Öffnen des Kupplungs-Steuerungsventils entspricht.

Bei einer passiv schließbaren Reibungskupplung, wie z.B. einer Membranfederkupplung, erfolgt die Ermittlung des Versorgungsdruckes p_{V} bevorzugt am Anfang eines anfahr- oder schaltungsbedingten Ausrückens der Reibungskupplung nach einer Vorbefüllung des Kupplungsstellers. Durch die zunächst durchgeführte Vorbefüllung des Druckraumes des Kupplungsstellers werden dadurch bedingte Verfälschungen bei der Ermittlung des Versorgungsdruckes p_{V} vermieden. Zudem verzögert die nachfolgende Druckerhöhung Δp_{K} zur Ermittlung des Versorgungsdruckes p_{V} den vorgesehenen Ausrückvorgang nicht weiter, da die weitere Erhöhung des Stelldruckes p_{K} zum Ausrücken der Reibungskupplung unmittelbar danach erfolgen kann.

Während des Fahrbetriebs erfofgt die Ermittlung des Versorgungsdruckes p_{V} bei einer passiv schließbaren Reibungskupplung bevorzugt in Betriebsphasen mit vollständig eingerückter Reibungskupplung mit einer vorhergehenden Vorbefüllung und einer nachfolgenden Drucklosschaltung des Kupplungsstellers. Die Ermittlung des Versorgungsdruckes p_{V} erfolgt in diesem Fall bei mit Überanpressung eingerückter Reibungskupplung, so dass die geringfügige Erhöhung des Stelldruckes p_{K} nicht zum Ausrücken bzw. Schlupfen der Reibungskupplung führen kann. Die vorhergehende Vorbefüllung des Kupplungsstellers dient zur Erhöhung der Genauigkeit des ermittelten Versorgungsdruckes p_{V}, und durch die nachfolgende Drucklosschaltung des Kupplungsstellers wird der Ausgangszustand mit vollständig eingerückter Reibungskupplung wieder hergestellt.

Bei einer aktiv schließbaren Reibungskupplung, wie z.B. einer Lamellenkupplung oder Lamellenbremse eines Automatgetriebes, erfolgt die Ermittlung des Versorgungsdruckes p_{V} bevorzugt am Ende eines anfahr- oder schaltungsbedingten Einrückens der Reibungskupplung vor Erreichen des vorgesehen Maximaldruckes des Kupplungsstellers, d.h. im Bereich der Überanpressung, ohne dass dadurch der betreffende Anfahr- oder Schaltvorgang verzögert wird.

Während des Fahrbetriebs erfolgt die Ermittlung des Versorgungsdruckes p_{V} bei einer aktiv schließbaren Reibungskupplung bevorzugt in Betriebsphasen mit vollständig eingerückter Reibungskupplung mit einer vorhergehenden Druckabsenkung des Kupplungsstellers. Die Ermittlung des Versorgungsdruckes wird somit ebenfalls im Bereich der Überanpressung durchgeführt, wobei durch die vorhergehende Druckabsenkung und die daran anschließende Druckerhöhung Δp_{K} der für die Überanpressung der Reibungskupplung vorgesehene Stelldruck pK automatisch wieder erreicht wird.

Um aus dem Stelldruck p_{K}, dem Druckanstieg Δp_{K} und/oder dem Druckgradienten Δp_{K} / Δt den Versorgungsdruck p_{V} bestimmen zu können sind Berechnungsparameter erforderlich, mittels denen z.B. der Einfluss der Geometrie des Drosselquerschnitts des kurzzeitig geöffneten Kupplungs-Steuerungsventils oder der Einfluss der Zähigkeit des Druckmittels auf den Druckanstieg Δp_{K} und somit auf den daraus berechneten Versorgungsdruck p_{V} berücksichtigt werden kann. Die Ermittlung mindestens eines derartigen Berechnungsparameters zur Berechnung des Versorgungsdruckes p_{V} aus dem sensorisch erfassten Druckanstieg Δp_{K} und/oder Druckgradienten Δp_{K} / Δt des Stelldruckes p_{K} kann zweckmäßig im Rahmen eines Einlernvorgangs der Getriebesteuerung erfolgen, d.h. im Rahmen der Erstinbetriebnahme des Kraftfahrzeugs beim Fahrzeughersteller oder bei einer Neuinbetriebnahme des Kraftfahrzeugs nach einer größeren Reparatur in einer Servicewerkstatt. Es ist auch denkbar, dass die Ermittlung mindestens eines derartigen Berechnungsparameters nach jedem Motorstart erfolgen kann.

Als Nutzanwendung kann der berechnete Versorgungsdruck p_{V} mit mindestens einer an die jeweilige Getriebesteuerung applizierbaren Druckschwelle P_{SW1}, P_{SW2}, P_{SW3} verglichen werden, und abhängig von der Höhe des Versorgungsdruckes p_{V} relativ zu der Druckschwelle p_{SW1}, p_{SW2}, p_{SW3} kann mindestens eine Sicherheitsfunktion ausgeführt werden.

Alternativ dazu kann mit ähnlicher Nutzanwendung jedoch auch vorgesehen sein, dass aus dem berechneten Versorgungsdruck p_{V} ein aktueller Leckagevolumenstrom Q_{L} bestimmt und die Höhe des Leckagevolumenstroms Q_{L} mit mindestens einer applizierbaren Leckageschwelle Q_{SW1}, Q_{SW2}, Q_{SW3} verglichen wird, und dass abhängig von der Höhe des Leckagevolumenstroms Q_{L} in Bezug auf die Leckageschwelle Q_{SW1}, Q_{SW2,} Q_{SW3}, also bei Überschreiten einer maximal zulässigen Leckage, mindestens eine Sicherheitsfunktion ausgeführt wird.

Demzufolge kann bei Fahrzeugstillstand das Einlegen eines Anfahrgangs gesperrt werden, wenn der Versorgungsdruck p_{V} eine mittlere Druckschwelle P_{SW2} erreicht oder unterschritten hat, oder wenn der Leckagevolumenstrom Q_{L} eine mittlere Leckageschwelle Q_{SW2} erreicht oder überschritten hat.

Ebenso kann vorgesehen sein, dass bei Fahrzeugstillstand ein ablaufender Anfahrvorgang abgebrochen und das Schaltgetriebe in seine Neutralstellung geschaltet wird, wenn der Versorgungsdruck p_{V} eine untere Druckschwelle P_{SW1} erreicht oder unterschritten hat, oder wenn der Leckagevolumenstrom Q_{L} eine obere Leckageschwelle Q_{SW3} erreicht oder überschritten hat.

Während der Fahrt kann das Schaltgetriebe in seine Neutralstellung geschaltet werden, wenn der Versorgungsdruck p_{V} die mittlere Druckschwelle P_{SW2} erreicht oder unterschritten hat, oder wenn der Leckagevolumenstrom Q_{L} die mittlere Leckageschwelle Q_{SW2} erreicht oder überschritten hat.

Da insbesondere bei einer passiv schließbar ausgebildeten Reibungskupplung das Ausrücken der Reibungskupplung bei zu niedrigem Versorgungsdruck p_{V} bzw. zu hohem Leckagevolumenstrom Q_{L} gegebenenfalls nicht mehr sicher bewerkstelligt werden kann, ist zweckmäßig vorgesehen, dass das Schaltgetriebe bei geschlossener Reibungskupplung in seine Neutralstellung geschaltet wird, wobei der Antriebsmotor während des Ausiegens des eingelegten Gangs durch eine diesbezüglich sinnvolle Motorsteuerung drehmomentfrei gehalten wird.

Zur Warnung des Fahrers wird zudem zweckmäßig ein akustisches und/oder optisches Warnsignal, wie das Ertönen eines periodisch unterbrochenen Warntons, das Blinken einer Warnleuchte und/oder die Anzeige einer entsprechenden Fehlermeldung in einem Display, ausgegeben, wenn der Versorgungsdruck p_{V} eine obere Druckschwelle P_{SW3} erreicht oder unterschritten hat, oder wenn der Leckagevolumenstrom Q_{L} eine untere Leckageschwelle Q_{SW1} erreicht oder überschritten hat.

Zur Verdeutlichung der Erfindung ist der Beschreibung eine Zeichnung mit zwei Ausführungsbeispielen beigefügt.

In diesen zeigt
- Fig. 1: den Druckverlauf des Stelldruckes bei der Ermittlung des Ver- sorgungsdruckes bei einer passiv schließbaren Reibungskupp- lung in einem Diagramm, und
- Fig. 2: den Druckverlauf des Stelldruckes bei der Ermittlung des Ver- sorgungsdruckes bei einer aktiv schließbaren Reibungskupplung in einem Diagramm.

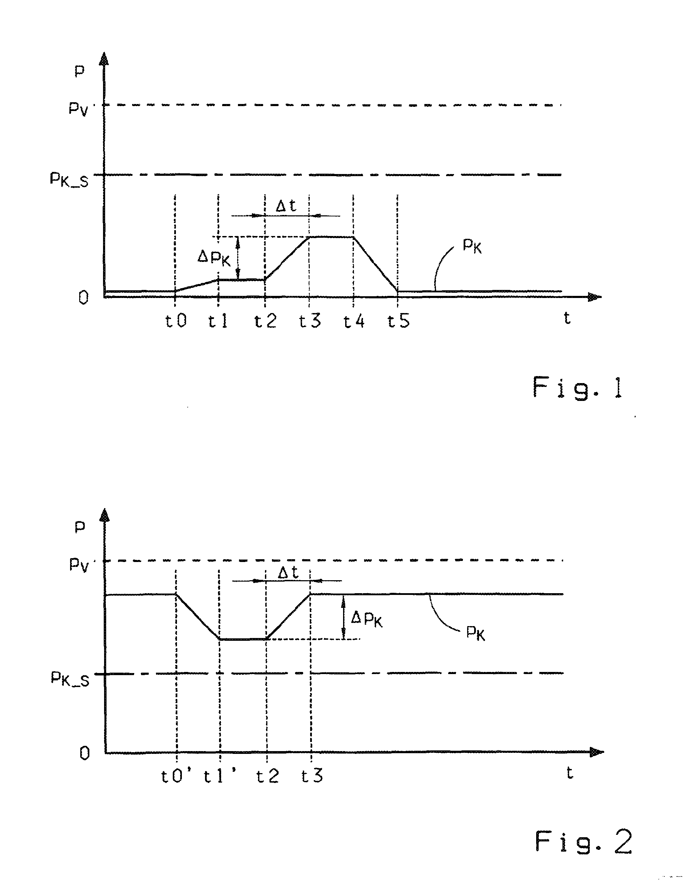

Der in Fig. 1 schematisch dargestellte und für eine passiv schließbare Reibungskupplung, wie z.B. eine aus der DE 10 2006 014 141 A1 bekannte Membranfederkupplung, gültige Druckverlauf des Stelldruckes p_{K} eines zugeordneten Kupplungsstellers bezieht sich auf die erfindungsgemäße Ermittlung des Versorgungsdruckes p_{V} des Druckversorgungsteils einer hydraulischen oder pneumatischen Getriebesteuerung während des Fahrbetriebs bei vollständig eingerückter Reibungskupplung, d.h. weitgehend drucklos geschaltetem Kupplungssteller.

Zwischen den Zeitpunkten t0 und t1 erfolgt zunächst eine Vorbefüllung des Kupplungsstellers, wodurch die Genauigkeit des nachfolgend ermittelten Versorgungsdruckes p_{V} erhöht wird. Hierzu wird das zugeordnete Kupplungs-Steuerungsventil kurzzeitig zu der Versorgungsleitung des Druckversorgungsteils hin geöffnet. Ab dem Zeitpunkt t2 wird das Kupplungs-Steuerungsventil erneut für die Zeitspanne Δt mit einem definierten Drosselquerschnitt zu der Versorgungsleitung hin geöffnet. Dabei wird mittels eines an den Druckraum des Kupplungsstellers angeschlossenen Drucksensors der zum Zeitpunkt t2 vorliegende Stelldruck p_{K}, der während der Zeitspanne Δt in dem Druckraum erzielte Druckanstieg Δp_{K}, sowie gegebenenfalls der in diesem Zeitraum zu verzeichnende Druckgradient Δp_{K} / Δt erfasst, und daraus nachfolgend unter Verwendung analytisch und/oder experimentell ermittelter Berechnungsparameter der in der Versorgungsleitung herrschende Versorgungsdruck p_{V} berechnet.

Danach wird der Kupplungssteller zwischen den Zeitpunkten t4 und t5 durch eine Verbindung des Druckraums mit einer zu einem Ölsumpf führenden Drucklosleitung drucklos geschaltet und damit die Reibungskupplung mit entsprechender Überanpressung wieder vollständig eingerückt. Da die Höhe des durch die Vorbefüllung und den nachfolgenden Druckanstieg Δp_{K} zur Ermittlung des Versorgungsdruckes p_{V} erhöhten Stelldruckes p_{K} weit unterhalb der Schlupfgrenze p_{K_S} der Reibungskupplung liegt, gerät die Reibungskupplung nicht in Schlupf, so dass der Fahrbetrieb durch den Verfahrensablauf nicht gestört wird.

Der in Fig. 2 schematisch dargestellte und für eine aktiv schließbare Reibungskupplung, wie z.B. eine Lamellenkupplung, gültige Druckverlauf des Stelldruckes p_{K} eines zugeordneten Kupplungsstellers bezieht sich ebenfalls auf die erfindungsgemäße Ermittlung des Versorgungsdruckes p_{V} des Druckversorgungsteils einer hydraulischen oder pneumatischen Getriebesteuerung während des Fahrbetriebs bei vollständig eingerückter Reibungskupplung, was in diesem Fall einem unter dem maximalen Stelldruck p_{K} stehenden Kupplungssteller entspricht.

Zwischen den Zeitpunkten t0' und t1' wird der in dem Druckraum des Kupplungsstellers herrschende Stelldruck p_{K} durch eine kurzzeitige Verbindung mit einer zu einer Druckmittelsenke führenden Drucklosleitung zunächst abgesenkt. Bei einem hydraulischen Steuerungssystem kann beispielsweise der Ölsumpf als Druckmittelsenke dienen, während bei einem pneumatischen Steuerungssystem die Abluft über die Drucklosleitung an die Umgebungsluft abgegeben werden kann. Anschließend wird zwischen dem Zeitpunkt t2 und dem Zeitpunkt t3 das zugeordnete Kupplungs-Steuerungsventil für die Zeitspanne Δt mit einem definierten Drosselquerschnitt zu der Versorgungsleitung hin geöffnet. Der zum Zeitpunkt t2 vorliegende Stelldruck p_{K}, der während der Zeitspanne Δt in dem Druckraum erzielte Druckanstieg Δp_{K} sowie gegebenenfalls der in diesem Zeitraum zu verzeichnende Druckgradient Δp_{K} / Δt wird dabei mittels eines an den Druckraum des Kupplungsstellers angeschlossenen Drucksensors erfasst und daraus nachfolgend unter Verwendung analytisch und/oder experimentell ermittelter Berechnungsparameter der in der Versorgungsleitung herrschende Versorgungsdruck p_{V} berechnet.

Die vorhergehende Druckabsenkung ist dabei so bemessen, dass sie im Betrag in etwa dem zur Ermittlung des Versorgungsdruckes p_{V} erzeugten Druckanstieg Δp_{K} entspricht, so dass die Reibungskupplung zum Zeitpunkt t3 ohne weitere Maßnahmen mit entsprechender Überanpressung wieder vollständig eingerückt ist. Da die Höhe des durch die Druckabsenkung verringerten Steildruckes p_{K} weit oberhalb der Schlupfgrenze p_{K_S} der Reibungskupplung liegt, gerät die Reibungskupplung nicht in Schlupf, so dass der Fahrbetrieb auch in diesem Fall durch den Verfahrensablauf nicht gestört wird.

### Bezugszeichen

- p_{K}: Stelldruck
- p_{K_S}: Schlupfgrenze
- p_{Q}: Quelldruck
- P_{S}: Stelldruck
- p_{SW1}: Untere Druckschwelle
- p_{SW2}: Mittlere Druckschwelle
- p_{SW3}: Obere Druckschwelle
- p_{V}: Versorgungsdruck
- Q_{L}: Leckagevolumenstrom
- Q_{SW1}: Untere Leckageschwelle
- Q_{SW2}: Mittlere Leckageschwelle
- Q_{SW3}: Obere Leckageschwelle
- t0 - t5: Zeitpunkte
- t0' - t1': Zeitpunkte
- Δp: Druckdifferenz
- Δp_{K}: Druckanstieg
- Δp_{S}: Druckanstieg
- Δt: Zeitspanne

## Patentansprüche

1. Verfahren zur Überwachung einer hydraulischen oder pneumatischen Getriebesteuerung, die einen Druckversorgungsteil mit einer Versorgungsleitung aufweist, welche ein unter einem Versorgungsdruck (p_{V}) stehendes Druckmittel führt, sowie mit einem Betätigungsteil eines Kupplungsstellers einer Reibungskupplung, wobei das Betätigungsteil einen Druckraum aufweist, der über ein zugeordnetes Kupplungs-Steuerungsventil mit der Versorgungsleitung verbindbar ist, und bei welcher der Versorgungsdruck (p_{V}) mittels eines über ein Steuerungsventil mit der Versorgungsleitung verbindbaren Drucksensors ermittelt wird, **dadurch gekennzeichnet, dass** der Versorgungsdruck (p_{V}) mittels eines an den Druckraum des Kupplungsstellers angeschlossenen Drucksensors ermittelt wird, indem durch ein kurzzeitiges Öffnen des Kupplungs-Steuerungsventils ein Druckanstieg (Δp_{K}) und/oder ein Druckgradient (Δp_{K} / Δt) des Stelldruckes (p_{K}) in dem Druckraum des Kupplungsstellers erzeugt wird, und aus dem mittels des Drucksensors erfassten Stelldruck (p_{K}) sowie dem Druckanstieg (Δp_{K}) und/oder dem Druckgradienten (Δp_{K} / Δt) der aktuell vorliegende Versorgungsdruck (p_{V}) berechnet wird.

2. Verfahren nach Anspruch 1, **dadurch gekennzeichnet, dass** zeitnah vor oder nach dem Öffnen des Kupplungs-Steuerungsventils zur Ermittlung des Versorgungsdruckes (p_{V}) durch eine kurzzeitige Verbindung des Druckraums des Kupplungsstellers mit einer Drucklosieitung ein Abfall (Δp_{K}) des Stelldruckes (p_{K}) erzeugt wird, der im Betrag in etwa dem Anstieg (Δp_{K}) des Stelldruckes (p_{K}) durch das Öffnen des Kupplungs-Steuerungsventils entspricht.

3. Verfahren nach Anspruch 1 oder 2, **dadurch gekennzeichnet, dass** die Ermittlung des Versorgungsdruckes (p_{V}) bei einer passiv schließbaren Reibungskupplung am Anfang eines anfahr- oder schaltungsbedingten Ausrückens der Reibungskupplung nach einer Vorbefüllung des Kupplungsstellers erfolgt.

4. Verfahren nach einem der Ansprüche 1 bis 3, **dadurch gekennzeichnet, dass** die Ermittlung des Versorgungsdruckes (p_{V}) bei einer passiv schließbaren Reibungskupplung während des Fahrbetriebs in Betriebsphasen mit vollständig eingerückter Reibungskupplung mit einer vorhergehenden Vorbefüllung und einer nachfolgenden Drucklosschaltung des Kupplungsstellers erfolgt.

5. Verfahren nach Anspruch 1 oder 2, **dadurch gekennzeichnet, dass** die Ermittlung des Versorgungsdruckes (p_{V}) bei einer aktiv schließbaren Reibungskupplung am Ende eines anfahr- oder schaltungsbedingten Einrückens der Reibungskupplung vor Erreichen des vorgesehen Maximaldruckes des Kupplungsstellers erfolgt.

6. Verfahren nach einem der Ansprüche 1, 2, oder 5, **dadurch gekennzeichnet, dass** die Ermittlung des Versorgungsdruckes (p_{V}) bei einer aktiv schließbaren Reibungskupplung während des Fahrbetriebs in Betriebsphasen mit vollständig eingerückter Reibungskupplung mit einer vorhergehenden Druckabsenkung des Kupplungsstellers erfolgt.

7. Verfahren nach einem der Ansprüche 1 bis 6, **dadurch gekennzeichnet, dass** mindestens ein Berechnungsparameter zur Berechnung des Versorgungsdruckes (p_{V}) aus dem sensorisch erfassten Druckanstieg (Δp_{K}) und/oder Druckgradienten (Δp_{K} / Δt) des Stelldruckes (p_{K}) im Rahmen eines Einlemvorgangs der Getriebesteuerung ermittelt wird.

8. Verfahren nach einem der Ansprüche 1 bis 7, **dadurch gekennzeichnet, dass** der berechnete Versorgungsdruck p_{V} mit mindestens einer applizierbaren Druckschwelle (p_{SW1}, p_{SW2}, p_{SW3}) verglichen wird, und dass abhängig von der Höhe des Versorgungsdruckes (p_{V}) relativ zu der Druckschwelle (p_{SW1}, p_{SW2}, p_{SW3}) mindestens eine Sicherheitsfunktion ausgeführt wird.

9. Verfahren nach einem der Ansprüche 1 bis 7, **dadurch gekennzeichnet, dass** aus dem berechneten Versorgungsdruck (p_{V}) ein aktueller Leckagevolumenstrom (Q_{L}) bestimmt und die Höhe des Leckagevolumenstroms (Q_{L}) mit mindestens einer applizierbaren Leckageschwelle (Q_{SW1}, Q_{SW2}, Q_{SW3}) verglichen wird, und dass abhängig von der Höhe des Leckagevolumenstroms (Q_{L}) in Bezug auf die Leckageschwelle (Q_{SW1}, Q_{SW2}, Q_{SW3}) mindestens eine Sicherheitsfunktion ausgeführt wird.

10. Verfahren nach Anspruch 8 oder 9, **dadurch gekennzeichnet, dass** bei Fahrzeugstillstand das Einlegen eines Anfahrgangs gesperrt wird, wenn der Versorgungsdruck (p_{V}) eine mittlere Druckschwelle (p_{SW2}) erreicht oder unterschritten hat, oder wenn der Leckagevolumenstrom (Q_{L}) eine mittlere Leckageschwelle (Q_{SW2}) erreicht oder überschritten hat.

11. Verfahren nach einem der Ansprüche 8 bis 10, **dadurch gekennzeichnet, dass** bei Fahrzeugstillstand ein ablaufender Anfahrvorgang abgebrochen und das Schaltgetriebe in seine Neutralstellung geschaltet wird, wenn der Versorgungsdruck (p_{V}) eine untere Druckschwelle (p_{SW1}) erreicht oder unterschritten hat, oder wenn der Leckagevolumenstrom (Q_{L}) eine obere Leckageschwelle (Q_{SW3}) erreicht oder überschritten hat.

12. Verfahren nach einem der Ansprüche 8 bis 11, **dadurch gekennzeichnet, dass** während der Fahrt das Schaltgetriebe in seine Neutralstellung geschaltet wird, wenn der Versorgungsdruck (p_{V}) die mittlere Druckschwelle (p_{SW2}) erreicht oder unterschritten hat, oder wenn der Leckagevolumenstrom (Q_{L}) die mittlere Leckageschwelle (Q_{SW2}) erreicht oder überschritten hat.

13. Verfahren nach Anspruch 11 oder 12, **dadurch gekennzeichnet, dass** das Schaltgetriebe bei geschlossener Reibungskupplung in seine Neutralstellung geschaltet wird, wobei der Antriebsmotor während des Auslegens des eingelegten Gangs durch eine diesbezüglich sinnvolle Motorsteuerung drehmomentfrei gehalten wird.

14. Verfahren nach einem der Ansprüche 8 bis 13, **dadurch gekennzeichnet, dass** zur Warnung des Fahrers ein akustisches und/oder optisches Warnsignal ausgegeben wird, wenn der Versorgungsdruck (p_{V}) eine obere Druckschwelle (p_{SW3}) erreicht oder unterschritten hat, oder wenn der Leckagevolumenstrom (Q_{L}) eine untere Leckageschwelle (Q_{SW1}) erreicht oder überschritten hat.

## Claims

1. Method for monitoring a hydraulic or pneumatic transmission controller which has a pressure supply part having a supply line which conducts pressure medium at a supply pressure (p_{V}), and also having an actuating part of a clutch actuator of a friction clutch, the actuating part having a pressure chamber which can be connected by means of an associated clutch control valve to the supply line, and in which transmission controller the supply pressure (p_{V}) is determined by means of a pressure sensor which can be connected by means of a control valve to the supply line, **characterized in that** the supply pressure (p_{V}) is determined, by means of a pressure sensor connected to the pressure chamber of the clutch actuator, by virtue of a pressure increase (Δp_{K}) and/or a pressure gradient (Δp_{K}/Δt) of the actuating pressure (p_{K}) being generated in the pressure chamber of the clutch actuator by virtue of the clutch control valve being briefly opened, and the presently prevailing supply pressure (p_{V}) being calculated from the actuating pressure (p_{K}) measured by means of the pressure sensor and from the pressure increase (Δp_{K}) and/or the pressure gradient (Δp_{K}/Δt).

2. Method according to Claim 1, **characterized in that**, a short time before or after the opening of the clutch control valve for determining the supply pressure (p_{V}), a drop (Δp_{K}) in the actuating pressure (p_{K}) is generated by virtue of the pressure chamber of the clutch actuator being briefly connected to an unpressurized line, which drop (Δp_{K}) approximately corresponds in terms of magnitude to the increase (Δp_{K}) of the actuating pressure (p_{K}) as a result of the opening of the clutch control valve.

3. Method according to Claim 1 or 2, **characterized in that**, in the case of a passively closable friction clutch, the determination of the supply pressure (p_{V}) takes place at the beginning of a start-induced or shift-induced disengagement of the friction clutch, after a prefilling of the clutch actuator.

4. Method according to one of Claims 1 to 3, **characterized in that**, in the case of a passively closable friction clutch, the determination of the supply pressure (p_{V}) takes place during driving operation in operating phases in which the friction clutch is fully engaged, with a preceding prefilling of and subsequent removal of pressurization from the clutch actuator.

5. Method according to Claim 1 or 2, **characterized in that**, in the case of an actively closable friction clutch, the determination of the supply pressure (p_{V}) takes place at the end of a start-induced or shift-induced engagement of the friction clutch, before the intended maximum pressure of the clutch actuator is reached.

6. Method according to one of Claims 1, 2 or 5, **characterized in that**, in the case of an actively closable friction clutch, the determination of the supply pressure (p_{V}) takes place during driving operation in operating phases in which the friction clutch is fully engaged, with a preceding pressure reduction in the clutch actuator.

7. Method according to one of Claims 1 to 6, **characterized in that** at least one calculation parameter for calculating the supply pressure (p_{V}) is determined from the sensor-measured pressure increase (Δp_{K}) and/or pressure gradient (Δp_{K}/Δt) of the actuating pressure (p_{K}) during the course of a teaching process of the transmission controller.

8. Method according to one of Claims 1 to 7, **characterized in that** the calculated supply pressure p_{V} is compared with at least one applicable pressure threshold (p_{SW1}, p_{SW2}, p_{SW3}), and **in that** at least one safety function is implemented depending on the magnitude of the supply pressure (p_{V}) relative to the pressure threshold (p_{SW1}, p_{SW2}, p_{SW3}).

9. Method according to one of Claims 1 to 7, **characterized in that** a present leakage volume flow (Q_{L}) is determined from the calculated supply pressure (p_{V}), and the magnitude of the leakage volume flow (Q_{L}) is compared with at least one applicable leakage threshold (Q_{SW1}, Q_{SW2}, Q_{SW3}), and **in that** at least one safety function is implemented depending on the magnitude of the leakage volume flow (Q_{L}) in relation to the leakage threshold (Q_{SW1}, Q_{SW2}, Q_{SW3}).

10. Method according to Claim 8 or 9, **characterized in that**, when the vehicle is at a standstill, the engagement of a starting gear is blocked if the supply pressure (p_{V}) reaches or has fallen below a middle pressure threshold (p_{SW2}), or if the leakage volume flow (Q_{L}) has reached or exceeded a middle leakage threshold (Q_{SW2}).

11. Method according to one of Claims 8 to 10, **characterized in that**, when the vehicle is at a standstill, a starting process which is taking place is terminated and the transmission is shifted into its neutral position if the supply pressure (p_{V}) has reached or fallen below a lower pressure threshold (p_{SW1}), or if the leakage volume flow (Q_{L}) has reached or exceeded an upper leakage threshold (Q_{SW3}).

12. Method according to one of Claims 8 to 11, **characterized in that**, during driving, the transmission is shifted into its neutral position if the supply pressure (p_{V}) has reached or fallen below the middle pressure threshold (p_{SW2}), or if the leakage volume flow (Q_{L}) has reached or exceeded the middle leakage threshold (Q_{SW2}).

13. Method according to Claim 11 or 12, **characterized in that** the transmission is shifted into its neutral position with the friction clutch closed, the drive engine being kept in a torque-free state, by means of engine control expedient for this purpose, during the disengagement of the engaged gear.

14. Method according to one of Claims 8 to 13, **characterized in that**, to warn the driver, an acoustic and/or visual warning signal is output if the supply pressure (p_{V}) has reached or fallen below an upper pressure threshold (p_{SW3}), or if the leakage volume flow (Q_{L}) has reached or exceeded a lower leakage threshold (Q_{SW1}).

## Revendications

1. Procédé de surveillance d'une commande d'engrenage hydraulique ou pneumatique, qui présente une partie d'alimentation en pression avec une conduite d'alimentation, qui conduit un fluide sous pression à une pression d'alimentation (pᵥ), et avec une partie d'actionnement d'un actionneur d'embrayage d'un embrayage à friction, la partie d'actionnement présentant un espace de pression qui peut être connecté à la conduite d'alimentation par le biais d'une soupape de commande d'embrayage associée, et dans lequel la pression d'alimentation (pᵥ) est déterminée au moyen d'un capteur de pression pouvant être connecté par le biais d'une soupape de commande à la conduite d'alimentation, **caractérisé en ce que** la pression d'alimentation (pᵥ) est déterminée au moyen d'un capteur de pression raccordé à l'espace de pression de l'actionneur d'embrayage, en produisant une augmentation de pression (Δp_{K}) et/ou un gradient de pression (Δp_{K}/Δt) de la pression de commande (p_{K}) dans l'espace de pression de l'actionneur d'embrayage par une brève ouverture de la soupape de commande d'embrayage, et en calculant la pression d'alimentation actuellement présente (pᵥ) à partir de la pression de commande (p_{K}) détectée au moyen du capteur de pression ainsi que de l'augmentation de pression (Δp_{K}) et/ou du gradient de pression (Δp_{K}/Δt).

2. Procédé selon la revendication 1, **caractérisé en ce que** juste avant ou après l'ouverture de la soupape de commande d'embrayage pour la détermination de la pression d'alimentation (pᵥ), une chute (Δp_{K}) de la pression de commande (p_{K}) est produite par une brève connexion de l'espace de pression de l'actionneur d'embrayage à une conduite sans pression, laquelle chute de pression correspond en valeur absolue approximativement à l'augmentation (Δp_{K}) de la pression de commande (p_{K}) par l'ouverture de la soupape de commande d'embrayage.

3. Procédé selon la revendication 1 ou 2, **caractérisé en ce que** la détermination de la pression d'alimentation (pᵥ) a lieu après un préremplissage de l'actionneur d'embrayage dans le cas d'un embrayage à friction à fermeture passive, au début d'un débrayage de l'embrayage à friction provoqué par un démarrage ou un changement de vitesse.

4. Procédé selon l'une quelconque des revendications 1 à 3, **caractérisé en ce que** la détermination de la pression d'alimentation (pᵥ) a lieu dans le cas d'un embrayage à friction à fermeture passive, pendant le mode de conduite dans des phases de fonctionnement avec l'embrayage à friction complètement embrayé avec un préremplissage préalable et un changement de vitesse sans pression subséquent de l'actionneur d'embrayage.

5. Procédé selon la revendication 1 ou 2, **caractérisé en ce que** la détermination de la pression d'alimentation (pᵥ) a lieu, dans le cas d'un embrayage à friction à fermeture active, à la fin d'un embrayage de l'embrayage à friction provoqué par un démarrage ou un changement de vitesse, avant d'atteindre la pression maximale prévue pour l'actionneur d'embrayage.

6. Procédé selon l'une quelconque des revendications 1, 2 ou 5, **caractérisé en ce que** la détermination de la pression d'alimentation (pᵥ) a lieu, dans le cas d'un embrayage à friction à fermeture active, pendant le mode de conduite dans des phases de fonctionnement avec l'embrayage à friction complètement embrayé avec une réduction de pression préalable de l'actionneur d'embrayage.

7. Procédé selon l'une quelconque des revendications 1 à 6, **caractérisé en ce qu'**au moins un paramètre de calcul pour le calcul de la pression d'alimentation (pᵥ) est déterminé à partir de l'augmentation de la pression détectée par capteur (Δp_{K}) et/ou d'un gradient de pression (Δp_{K}/Δt) de la pression de commande (p_{K}) dans le cadre d'une opération d'apprentissage de la commande d'engrenage.

8. Procédé selon l'une quelconque des revendications 1 à 7, **caractérisé en ce que** la pression d'alimentation calculée (pᵥ) est comparée avec au moins un seuil de pression applicable (p_{SW1}, p_{SW2}, p_{SW3}), et **en ce qu'**au moins une fonction de sécurité est mise en oeuvre en fonction du niveau de la pression d'alimentation (pᵥ) par rapport au seuil de pression (p_{SW1}, p_{SW2}, p_{SW3}).

9. Procédé selon l'une quelconque des revendications 1 à 7, **caractérisé en ce que** l'on détermine à partir de la pression d'alimentation calculée (pᵥ), un débit volumique de fuite actuel (Q_{L}) et l'on compare le niveau du débit volumique de fuite (Q_{L}) avec au moins un seuil de fuite applicable (Q_{SW1}, Q_{SW2}, Q_{SW3}), et **en ce qu'**en fonction du niveau du débit volumique de fuite (Q_{L}) par rapport au seuil de fuite (Q_{SW1}, Q_{SW2}, Q_{SW3}), on met en oeuvre au moins une fonction de sécurité.

10. Procédé selon la revendication 8 ou 9, **caractérisé en ce qu'**à l'arrêt du véhicule, l'enclenchement d'une vitesse de démarrage est bloqué, si la pression d'alimentation (pᵥ) a atteint ou est descendue en dessous d'un seuil de pression moyen (p_{SW2}), ou si le débit volumique de fuite (Q_{L}) a atteint ou a dépassé un seuil de fuite moyen (Q_{SW2}).

11. Procédé selon l'une quelconque des revendications 8 à 10, **caractérisé en ce qu'**à l'arrêt du véhicule, une opération de démarrage se terminant est interrompue, et l'engrenage de changement de vitesse est commuté dans sa position neutre, lorsque la pression d'alimentation (pᵥ) a atteint ou est descendue en dessous d'un seuil de pression inférieur (p_{SW1}), ou si le débit volumique de fuite (Q_{L}) a atteint ou a dépassé un seuil de fuite supérieur (Q_{SW3}).

12. Procédé selon l'une quelconque des revendications 8 à 11, **caractérisé en ce que** pendant la conduite, l'engrenage de changement de vitesse est commuté dans sa position neutre, si la pression d'alimentation (pᵥ) a atteint ou est descendue en dessous du seuil de pression moyen (p_{SW2}), ou si le débit volumique de fuite (Q_{L}) a atteint ou a dépassé le seuil de fuite moyen (Q_{SW2}).

13. Procédé selon la revendication 11 ou 12, **caractérisé en ce que** l'engrenage de changement de vitesse est commuté dans sa position neutre lorsque l'embrayage à friction est fermé, le moteur d'entraînement étant maintenu sans couple pendant la sortie de la vitesse enclenchée par une commande de moteur spécialement conçue à cet égard.

14. Procédé selon l'une quelconque des revendications 8 à 13, **caractérisé en ce que** pour avertir le conducteur, un signal d'avertissement acoustique et/ou optique est délivré, si la pression d'alimentation (pᵥ) a atteint ou est descendue en dessous d'un seuil de pression supérieur (p_{SW3}), ou si le débit volumique de fuite (Q_{L}) a atteint ou a dépassé un seuil de fuite inférieur (Q_{SW1)}.
